(19) Europäisches Patentamt

European Patent Office

Office européen des brevets

(11) Veröffentlichungsnummer: **0 419 978 A1**

(12) **EUROPÄISCHE PATENTANMELDUNG**

(21) Anmeldenummer: **90117783.2**

(22) Anmeldetag: **15.09.90**

(51) Int. Cl.⁵: **A01C 15/00**

(30) Priorität: **28.09.89 DE 3932285**

(43) Veröffentlichungstag der Anmeldung:
**03.04.91 Patentblatt 91/14**

(84) Benannte Vertragsstaaten:
**DE DK FR GB NL**

(71) Anmelder: **Amazonen-Werke H. Dreyer GmbH & Co. KG**
**Am Amazonenwerk 9-13**
**W-4507 Hasbergen-Gaste(DE)**

(72) Erfinder: **Dreyer, Heinz, Dipl.-Ing.-Dr.**
**Am Amazonenwerk 7**
**W-4507 Hasbergen(DE)**

(54) **Verteilmaschine.**

㊼ Verteilmaschine, beispielsweise Düngerstreuer, Sämaschine etc., mit einem trichterförmigen Vorratsbehälter, auf dem in bevorzugter Weise abnehmbar ein oder mehrere, sowie verschiedene Aufsatzbehälterteile aufsetzbar sind, so daß der Vorratsbehälter in der oberen Hälfte (Bereich) eine Teilebene aufweist, wobei zum Aufsatz auf den unteren Teil des Vorratsbehälters Aufsatzbehälterteile unterschiedlicher Breite (insbesondere quer zur Fahrtrichtung) vorgesehen sind. Um auf einfachste Weise die Vorratsbehälterbreite an die Forderungen der Praxis optimal anpassen zu können, ist vorgesehen, daß bei gleichbleibendem Grundbehälterteil des Vorratsbehälters (17) zumindest zwei Aufsatzbehälterteile (18,22,), wobei der eine eine maximale Querstreckung von der Außenseite kleiner oder gleich 2,50 m und der andere eine maximale Querstreckung über 2,50 m, jedoch maximal von 3,00 m aufweist, wahlweise zur Montage auf den Grundbehälter (17) vorgesehen sind.

FIG. 3

## VERTEILMASCHINE

Die Erfindung betrifft eine Verteilmaschine, beispielsweise Düngerstreuer, Sämaschine etc., mit einem trichterförmigen Vorratsbehälter gemäß Oberbegriff des Patentanspruches 1.

Derartige, als Düngerstreuer ausgebildete Verteilmaschinen mit auf gleichbleibendem Grundbehälterteil aufsetzbaren, verschiedenen Aufsatzbehälterteilen sind durch den Prospekt "RAUCH Zweischeiben-Düngerstreuer KOMET ZSB" mit dem Druckvermerk KOMET 09/86 B + K bekannt. Diese unterschiedlich ausgebildeten Aufsatzbehälterteile dienen zur Herstellung von unterschiedliche Fassungsvermögen aufweisende Düngerstreuervorratsbehälter. Die Aufsatzbehälterteile weisen je nach gewünschtem Fassungsvermögen des Düngerstreuervorratsbehälter eine unterschiedliche Bauhöhe auf, so daß sich auch mit zunehmendem Fassungsvermögen des Vorratsbehälters die Einfüllhöhe des Düngerstreuervorratsbehälters erhöht. Dadurch, daß zum Vergrößern des Fassungsvermögens des Vorratsbehälters nur die Bauhöhe des Vorratsbehälters, durch das jeweilige Aufsatzbehälterteil, vergrößert wird, bleibt die sich ergebende Einfüllbreite des Vorratsbehälters mit und ohne Aufsatzbehälter annähernd gleich. Bei einem Düngerstreuertyp wird zur Vergrößerung des Vorratsbehälterfassungsvermögens die Einfüllbreite, d.h. die Baubreite quer zur Fahrtrichtung, durch den Behälteraufsatz - bei reduzierter Einfüllhöhe - vergrößert. Die Einfüllbreite des Vorratsbehälters entspricht hier bis auf wenige Zentimeter der gesamten Breite des Düngerstreuers quer zur Fahrtrichtung. Die Einfüllbreite dieser durch den Einsatz von Aufsatzbehältern ein größeres Fassungsvermögen aufweisenden, bekannten Vorratsbehälter beträgt maximal 2,3 m. Durch die zum Einsatz kommenden verschiedenen Beladesysteme bzw. Ladeschaufelbreiten zum Befüllen der Düngerstreuervorratsbehälter reichen die bekannten Einfüllbreiten für die Vorratsbehälter oftmals nicht mehr aus.

Der Erfindung liegt die Aufgabe zugrunde, auf einfachste Weise die Vorratsbehälterbreite an die Forderungen der Praxis optimal anpassen zu können.

Diese Aufgabe wird in erfinderungsgemäßer Weise dadurch gelöst, daß bei gleichbleibendem Grundbehälterteil des Vorratsbehälters zumindest zwei Aufsatzbehälterteile, wobei der eine eine maximale Querstreckung von der Außenseite kleiner oder gleich 2,5 m und der andere eine maximale Querstreckung über 2,5 m, jedoch maximal 3,0m aufweist, wahlweise zur Montage auf dem Grundbehälter vorgesehen sind.

Infolge dieser Maßnahmen läßt sich der Düngerstreuer mit einfachsten Mitteln wesentlich universeller einsetzen. Durch den Einsatz von Aufsatzbehälterteilen mit unterschiedlicher Querstreckung, also auch unterschiedlicher Einfüllbreite quer zur Fahrtrichtung, ist es auf einfachste Weise möglich, den Düngerstreuer entsprechend an das vorhandene Beladesystem bzw. an die Ladeschaufelbreite zum Befüllen des Vorratsbehälters anzupassen. Durch die entsprechende Wahl der jeweiligen Aufsatzbehälterteilebreiten, jeweils quer zur Fahrtrichtung, findet dann auch die für das jeweilige Einsatzland der Düngerstreuer gültige Straßenverkehrszulassungsordnung, hinsichtlich der gesetzlich vorgeschriebenen Transportbreiten für landwirtschaftliche Fahrzeuge und Geräte zum Befahren öffentlicher Straßen und Wege, ihre Berücksichtigung.

In einer weiteren Ausführungsform ist erfindungsgemäß vorgesehen, daß der trichterförmige Vorratsbehälter und/oder die Aufsatzbehälterteile an ihrer Frontseite ein oder mehrere Sichtfenster aufweisen. Hierdurch läßt sich in besonders einfacher Weise das Ausbringen der Düngemittelpartikel während des Ausbringvorganges vom Schleppersitz aus durch den Schlepperfahrer beobachten.

Zu einfachen, platzsparenden Lagerhaltung und zum einfacheren Versand der Aufsatzbehälterteile ist erfindungsgemäß vorgesehen, daß die Aufsatzbehälterteile aus mehreren Teilen bestehen, die zusammensetzbar sind und wobei die Trennungsebene/-linie aufrecht und /oder horizontal verläuft. Hierdurch ist es auch möglich, daß bei der Beschädigung von einzelnen Aufsatzbehälterteilen diese auch nur ausgetauscht werden müssen.

Weitere Einzelheiten der Erfindung sind der Beispielsbeschreibung und den Zeichnungen zu entnehmen. Hierbei zeigt

Fig. 1 den mit einem Aufsatzbehälter ausgerüsteten Düngerstreuer in der Ansicht von hinten,

Fig. 2 die Anordnung eines andersartig ausgebildeten Aufsatzbehälters auf einen Düngerstreuer in der Ansicht von hinten,

Fig. 3 die Anordnung eines Aufsatzbehälters auf einen Düngerstreuer mit kleinerem Grundbehälterteil in der Ansicht von hinten,

Fig. 4 der Düngerstreuer gemäß Fig. 3 mit einem anderen Aufsatzbehälter in der Ansicht von hinten und

Fig. 5 einen am Schlepper angeordneten Düngerstreuer in der Seitenansicht.

Die Verteilmaschine ist als Schleuderdüngerstreuer ausgebildet und weist den Rahmen 1 auf, an dem der Vorratsbehälter 2 befestigt ist. Der Vorratsbehälter 2 ist durch das dachförmige Mittelteil 3 derart unterteilt, daß die beiden trichterförmigen Behälterteile 4 entstehen. In dem jeweiligen unteren Bereich 5 dieser trichterförmigen Behälterteile 4 ist die Bodenplatte 6 angeordnet. In dieser Bodenplatte 6 ist jeweils die nicht näher dargestellte Auslauföffnung angeordnet, welche sich mittels ebenfalls nicht näher dargestellter Schieber in unterschiedlichen Öffnungsweiten einstellen und verschließen läßt.

Die sich im Inneren des Vorratsbehälters 2 befindlichen Düngemittelpartikel gelangen jeweils in einstellbaren Mengen über die in den Bodenplatten 6 angeordneten Auflauföffnungen zu den auf den Ausgangswellen 7 der Winkelgetriebe 8 befestigten Schleuderscheiben 9. Die den Schleuderscheiben 9 zugeführten Düngemittelpartikel werden von den auf den Schleuderscheiben 9 angeordneten Wurfelementen 10 gleichmäßig über die zu bestreuende Fläche abgeschleudert. Der Antrieb der Winkelgetriebe 8 erfolgt über ein nicht näher dargestelltes Mittelgetriebe, welches über eine Gelenkwelle mit der Zapfwelle des den Schleuderdüngerstreuer transportierenden Schleppers verbunden ist.

Das Fassungvermögen des Vorratsbehälters 2, welcher als gleichbleibendes Grundbehälterteil ausgebildet ist, wird durch Aufsatz des Aufsatzbehälters 11 vergrößert. Die Teilebene 12 verläuft zwischen der oberen Hälfte 13 des Vorratsbehälters 2 und der unteren Hälfte 14 des Aufsatzbehälters 11. Der Aufsatzbehälter 11 weist die gleiche Breite quer zur Fahrtrichtung gesehen auf, wie der Vorratsbehälter 2 des Schleuderdüngerstreuers. Der Aufsatzbehälter 11 sowie der Vorratsbehälter 2 des Schleuderdüngerstreuers weist beispielsweise eine Breite A von 2,5 m auf.

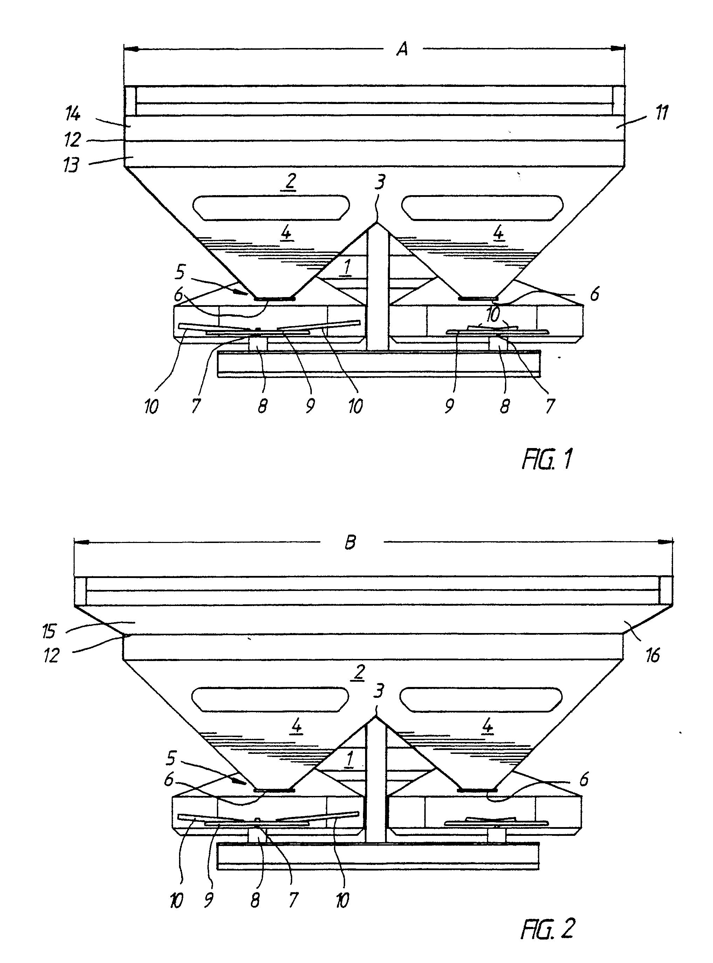

Der Schleuderdüngerstreuer gemäß Fig. 2 unterscheidet sich nur durch den andersartig ausgebildeten Aufsatzbehälter 15 von dem Schleuderdüngerstreuer gemäß Fig. 1. Die Teil-bzw. Trennebene 12 verläuft ebenfalls zwischen der oberen Hälfte 13 des Vorratsbehälters 2 und der unteren Hälfte 16 des Behälteraufsatzes 15. Der Aufsatzbehälter 15 weist die Breite B von 3,0 m auf und überragt den als gleichbleibenden Grundbehälterteil ausgebildeten Vorratsbehälter 2 jeweils quer zur Fahrtrichtung. Der Vorratsbehälter 2 weist beispielsweise eine Breite von 2,5 m auf.

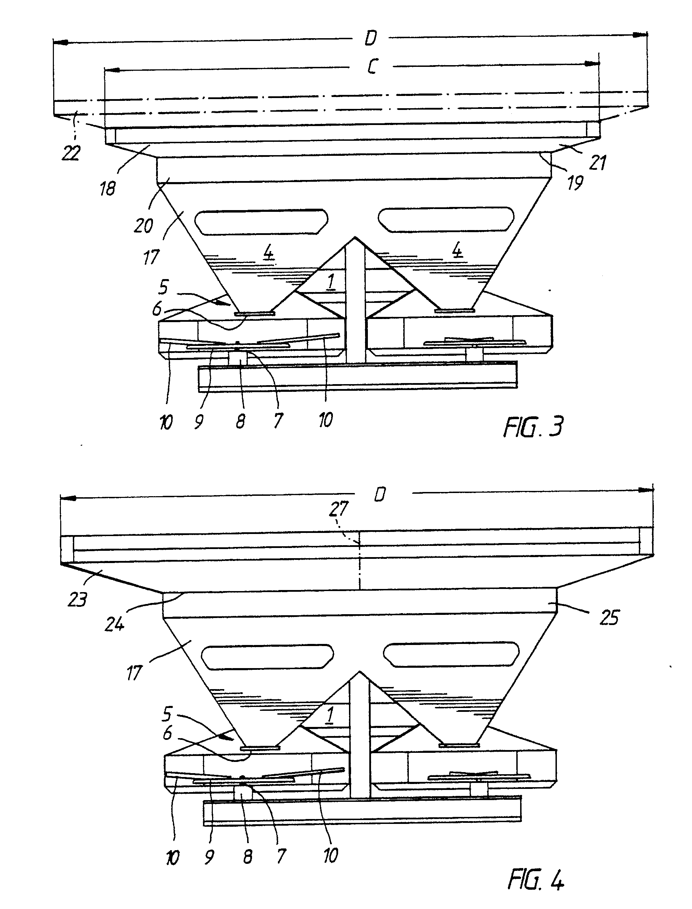

Bei dem Schleuderdüngerstreuer gemäß Fig. 3 handelt es sich um einem Schleuderdüngerstreuer mit einem eine geringere breite aufweisenden Vorratsbehälter 17. Dieser Vorratsbehälter 17 weist beispielsweise eine Breite von 2,0 m auf. Auf dem Vorratsbehälter 17 ist der Aufsatzbehälter 18 aufgesetzt, wobei die Teil- oder Trennebene 19 zwischen der oberen Hälfte 20 und der unteren Hälfte 21 des Behälteraufsatzes 18 verläuft. Die Breite des Behälteraufsatzes 18 überragt die Breite des Vorratsbehälters 17 und weist die Breite C von 2,5 m auf. Es ist ebenfalls möglich, den mit strichpunktierten Linien angedeuteten Aufsatzbehälter 22 auf den Aufsatzbehälter 18 aufzusetzen, wobei der Aufsatzbehälter 22 die Breite D von 3,0 m einnimmt. Hierdurch läßt sich nun auch bei einem Schleuderdüngerstreuer mit schmalem Vorratsbehälter von beispielsweise 2,0 m die Einfüllöffnung durch den Aufsatz von einem bzw. zwei Aufsatzbehältern in einfacher Weise vergrößern.

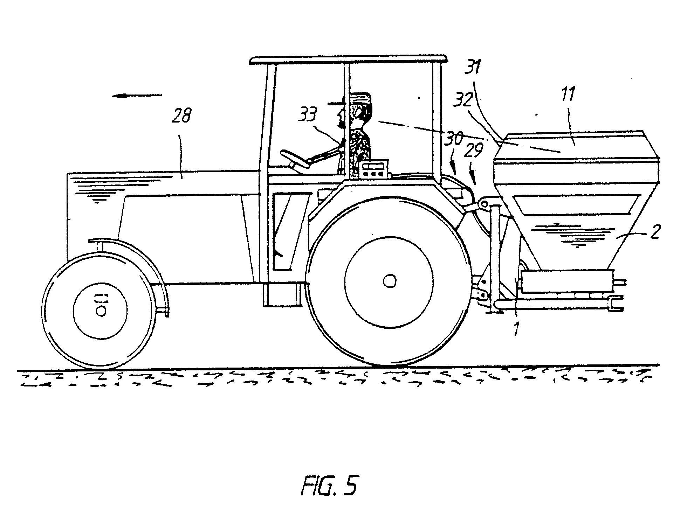

Die Fig. 4 zeigt den Schleuderdüngerstreuer gemäß Fig. 3 mit dem Vorratsbehälter 17, auf dem der die Breite D von 3,0 m aufweisende Aufsatzbehälter 23 aufgesetzt ist. Hierbei verläuft die Teilbzw. Trennebene 24 zwischen der oberen Hälfte 25 des Vorratsbehälters 17 und der unteren Hälfte 26 des Aufsatzbehälters 23. Es ist auch möglich, daß der Aufsatzbehälter 23 noch mit einer zusätzlichen, aufrecht verlaufenden Teil- bzw. Trennebene 27, wie sie mit strichpunktierten Linien dargestellt ist, aufweist.

Die Fig. 5 zeigt den Schleuderdüngerstreuer gemäß Fig. 1 in verkleinertem Maßstab in der Anordnung hinter dem Ackerschlepper 28. Der Schleuderdüngerstreuer ist mittels der am Rahmen 1 angeordneten Dreipunktkupplungselemente 29 an dem Dreipunktkraftheber 30 des Ackerschleppers 28 befestigt. In seinem vorderen Bereich 31 weist der Aufsatzbehälter 11 zwei Sichtfenster 32 auf. Die Sichtfenster 32 sind derart im Aufsatzbehälter 11 angeordnet, so daß der Schlepperfahrer 33 während des Ausbringvorganges in die einzelnen trichterfömigen Behälterteile 4 hineinsehen kann. Hierdurch wird dem Schlepperfahrer ermöglicht, die Funktionsweise des Schleuderdüngerstreuers durch Beobachtung des sich in den einzelnen Behälterteilen 4 befindlichen Behälterfüllstandes zu kontrollieren.

## Ansprüche

1.Verteilmaschine, beispielsweise Düngerstreuer, Sämaschine etc., mit einem trichterförmigen Vorratsbehälter, auf dem in bevorzugter Weise abnehmbar ein oder mehrere sowie verschiedene Aufsatzbehälterteile aufsetzbar sind, so daß der Vorratsbehälter in der oberen Hälfte (Bereich) eine Teilebene aufweist, wobei zum Aufsatz auf den unteren Teil des Vorratsbehälters Aufsatzbehälterteile unterschiedlicher Breite (insbesondere quer zur Fahrtrichtung) vorgesehen sind, dadurch gekennzeichnet, daß bei gleichbleibendem Grundbehälterteil des Vorratsbehälters (2,17) zumindest zwei Aufsatzbehälterteile (11,15,18,22,23), wobei der eine eine maximale Querstreckung von der Außenseite kleiner oder gleich 2,50 m und der andere eine maximale Querstreckung über 2,50 m, jedoch maximal von 3,00 m aufweist, wahlweise zur Montage auf den Grundbehälter (2,17) vorgesehen sind.

2.Verteilmaschine nach Anspruch 1, dadurch gekennzeichnet, daß der trichterförmige Vorratsbehälter (2,17) und/oder die Aufsatzbehälterteile (11,15,18,22,23) an ihrer Frontseite (31) ein oder mehrere Sichtfenster (32) aufweisen.

3.Verteilmaschine nach Anspruch 1, dadurch gekennzeichnet, daß die Aufsatzbehälterteile (11,15,18,22,23) aus mehreren Teilen bestehen, die zusammensetzbar sind und wobei die Trennungsebene/-linie (12,19,24,27) aufrecht und/oder horizontal verläuft.

FIG. 1

FIG. 2

FIG. 3

FIG. 4

FIG. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | FR-A-2 479 708  (POUYAUD)<br>* Seite 3, Zeilen 15 - 18; Figur 2 *<br>– – – | 1,3 | A 01 C 15/00 |
| A | US-A-4 460 214  (KUHNS)<br>* Spalte 3, Zeile 8 - Spalte 4, Zeile 34; Figuren 1-4 *<br>– – – | 1,3 | |
| A | EP-A-0 216 058  (AMAZONEN-WERKE)<br>* Spalte 4, Zeilen 35 - 46; Figuren 1, 2 *<br>– – – | 1 | |
| A | FR-A-2 409 686  (AMAZONEN-WERKE)<br>* Seite 6, Zeilen 10 - 19; Figuren 1, 3 *<br>– – – | 2 | |
| A | DE-B-3 009 588  (AMAZONEN-WERKE)<br>* das ganze Dokument *<br>– – – – – | 2 | |

| RECHERCHIERTE SACHGEBIETE (Int. Cl.5) |
|---|
| A 01 C<br>B 62 D |

Der vorliegende Recherchenbericht wurde für alle Patentansprüche erstellt

| Recherchenort | Abschlußdatum der Recherche | Prüfer |
|---|---|---|
| Den Haag | 21 Januar 91 | PERNEY Y.J. |